# EUROPÄISCHE PATENTANMELDUNG

(11) **EP 0 620 172 A1**
(43) Veröffentlichungstag der Anmeldung: **19.10.1994**
(21) Anmeldenummer: 93106220.2
(22) Anmeldetag: 16.04.1993
(51) Int. Cl.: B65G 53/48

(54) **Schneckenpumpe zum kontinuierlichen Fördern staubförmiger und feinkörniger Schüttgüter**

(71) Anmelder: IBAU HAMBURG INGENIEURGESELLSCHAFT INDUSTRIEBAU MBH, D-20459 Hamburg (DE)
(72) Erfinder: Lummel, Wolfgang, W-2000 Hamburg 11 (DE)
(74) Vertreter: von Raffay, Vincenz, Dipl.-Ing.

(57) **Zusammenfassung**

Die Schneckenpumpe zum kontinuierlichen Fördern staubförmiger und feinkörniger Schüttgüter weist einen Schneckenbaum auf, der das Schüttgut aus einem unter niedrigem Druck stehenden Einlaufraum (6) in eine unter höherem Druck stehende Förder- oder Druckkammer (7) fördert. Der Auslaß der Druckkammer (7) ist durch eine Rückschlagklappe (8) abgedichtet. Der Schneckenbaum ist zweiteilig ausgebildet. Er besteht aus einer außerhalb gelagerten Lager- oder Antriebswelle (3) und aus der eigentlichen Schnecke (5,16). Diese Schnecke ist aus Metallguß, vorzugsweise Stahlguß hergestellt. Die Verbindung der beiden Teile erfolgt durch eine Flanschverbindung (4), wobei an dem Flansch der Lager- oder Antriebswelle ein Aufsteckdorn (15) vorgesehen ist, auf den die Schnecke (5,16) mit Hilfe einer entsprechend ausgebildeten und dimensionierten Innenbohrung aufgesteckt wird. Die Schnecke läßt sich kostengünstig mit hoher Verschleißfestigkeit herstellen. Schneckenwendel und Kerndurchmesser der Schneckenwelle lassen sich mit variablen Querschnittsformen herstellen, um somit Einfluß in Anpassung an die verschiedenen Schüttgüter zu ermöglichen. Bei einem Wechsel, bedingt durch Verschleiß oder dergl., wird lediglich die Schnecke, nicht aber die Lager- oder Antriebswelle ausgewechselt.

## Beschreibung

Die Erfindung betrifft eine Schneckenpumpe nach dem Oberbegriff des Patentanspruches 1.

Der Raum, in den das Schüttgut bei niedrigem Druck eingegeben wird, steht normalerweise unter Umgebungsdruck. Um den Schleusenvorgang möglichst ohne Luftrückschlag bewerkstelligen zu können, müssen einerseits relativ hohe Schneckendrehzahlen, allgemein ca. 1000 U/min eingehalten werden, und andererseits wird ein Materialpfropfen vor der Rückschlagklappe vorgesehen.

Die Förderschnecke muß das Schüttgut gegen einen Förderleitungsrückdruck bis ca. 2 bar in das Fördergehäuse mit Druckluftzufuhr einspeisen. Der Schneckenwirkungsgrad beträgt unter diesen Betriebsbedingungen etwa 25 bis 30 %. Die zwangsläufig in Abhängigkeit des Schüttgutes eintretenden Verschleißbelastungen werden von leicht auswechselbaren Verschleißteilen aufgenommen. Die einseitige Lagerung der Schneckenwelle in einem Lagergehäuse hat sich für diesen robusten Förderbetrieb bewährt in annähernd 7 Jahrzehnten. Beim Wechsel der Förderschnecke wird diese nach vorne durch das Fördergehäuse ausgebaut. Ein weiterer bewährter Vorteil dieser einseitigen Lagerung besteht darin, daß die beiden Wälzlager sich in der druckentlasteten Zone befinden und nicht dem Druck des Feststoff-Luftgemisches ausgesetzt werden. Diese Schneckenpumpen mit durchgehender Schneckenwelle gehen aus folgenden Druckschriften hervor:
DE-OS 25 07 687, US-PS 3,602,552, US-PS 3,975,058, FR-PS 7 039 326, US-PS 2,489,980.

Eine andere Ausführung der Schneckenwellenlagerung an beiden Wellenenden ist aus der Druckschrift DE-OS 32 24 710 bekannt.

Die Schneckenpumpen arbeiten zum Teil unter sehr unterschiedlichen Betriebsbedingungen in Abhängigkeit des Schüttgutes, des Mengenstromes, der Förderentfernung, z.T. über einige 100 Meter und der Laufzeiten. Aufgrund vorerwähnter Verhältnisse steht dem an sich robusten Betrieb dieser Pumpen der mehr oder weniger anfallende Verschleiß entgegen. Nach dem stand der Technik müssen bei einem Austausch die aus einem Stück gefertigten Schneckenbäume entfernt und erneuert werden. Die Herstellung dieser relativ langen Schneckenwellen ist sehr kostenintensiv. Die Schneckenwindungen werden aus Flacheisen warm auf die gedrehte Schneckenwelle gewendelt und anschließend mit dieser verschweißt. Durch Wärmebehandlungen und Ungenauigkeiten entstehen Unwuchten, die beseitigt werden müssen, damit die Verschleißbelastungen in Grenzen gehalten werden können. Die aufgezogene Steigung der Schneckengänge ist mit Toleranzbereichen versehen, die nicht mehr zu korrigieren sind und Ungleichmäßigkeiten im Einschleusvorgang in die Druckkammer verursachen, so daß Luftrückschlag entsteht, der den Strahlverschleiß an der Schnecke unterstützt. Es müssen auch für bestimmte Schüttgüter und Betriebsbedingungen Schnecken mit Kompression, also abnehmender Schneckensteigung, in Richtung Schneckengehäuseauslauf eingesetzt werden. Die Fertigung wird noch schwieriger und Unregelmäßigkeiten in den Konstruktionsmaßen nehmen zu. Die vorerwähnten konstruktiven Fertigungsauswirkungen führen also neben den erhöhten Herstellungskosten für die durchgehenden Schneckenwellen zusätzlich infolge erhöhter Verschleißbelastung zur Erhöhung der Betriebskosten.

Der Erfindung liegt daher die Aufgabe zugrunde, eine Schneckenpumpe der eingangs genannten Art zu schaffen, die sich kostengünstiger und dennoch mit höherer Fertigungsgenauigkeit herstellen läßt, und bei der die sog. "Verschleißbelastung" deutlich vermindert wird, so daß auch ein entsprechend geringerer Kosten- und Wartungsaufwand vorliegt.

Diese Aufgabe wird durch das Kennzeichen des Anspruches 1 gelöst.

Dadurch, daß der Schneckenbaum in einem Lagerabschnitt außerhalb des eigentlichen Gehäuses und in einen Schneckenabschnitt innerhalb des Gehäuses aufgeteilt ist, kann der Schneckenabschnitt, d.h. die Schnecke, so ausgebildet sein, wie es hinsichtlich der an sie gestellten technischen Anforderungen am zweckmäßigstens ist. Die Schnecke wird aus einem verschleißfesten Metallguß, vorzugsweise Stahlguß oder auch grauen Hartgußqualitäten hergestellt. Hierdurch ist eine große Fertigungs- und Abmessungsgenauigkeit möglich. Form und Abmessungen können so gewählt werden, wie es für die unterschiedlichen Förderbedingungen und Fördermaterialien am zweckmäßigsten ist.
Unterschiedliche Feinheiten und damit Schüttdichten der Schüttgüter nehmen stark Einfluß auf die Durchsatzmengen in den Pumpen. Es treten deshalb immer wieder wegen nicht erreichter Mengenströme Störungen oder zumindest Zeitverzögerungen auf. Drehzahlerhöhungen sind aus den vorerwähnten Herstellungs- und Verschleißbelastungen nur begrenzt oder auch überhaupt nicht durchführbar.

Die erfindungsgemäße Schnecke zeichnet sich durch eine erheblich größere Laufruhe aus und besitzt als Hartgußschnecke eine an der gesamten Oberfläche wirkende höhere Abriebfestigkeit. Die Drehzahlen der Schnecken können deutlich erhöht werden, so daß einerseits Steigerungen der Mengenströme bis ca. 70 % erreicht werden und andererseits auch kleinere Pumpengrößen für die vergleichbaren Durchsätze ausreichen.

Die Lebensdauer wird durch entsprechende Gußmaterialien verlängert. Wenn ein Auswechseln erforderlich ist, kann dieses leicht durch Lösen der Flanschverbindung geschehen. Es wird dann nur die Schnecke, nicht aber die Antriebs- und Lagerwelle ausgewechselt. Es lassen sich auch komplizierte Schneckenformen mit unterschiedlichen Profilen, Steigungen und Abmessungen je nach den Förderanforderungen herstellen.

Vorteilhafte Ausgestaltungen sind Gegenstand der Unteransprüche. Wenn die Schnecke beispielsweise so ausgebildet ist, wie in Anspruch 3 angegeben, dann wird die Kompression des geförderten Materiales in Richtung auf den Ausgang nicht durch Veränderung der Steigung der Schneckenwendel, sondern durch Vergrößerung des Kerndurchmessers der Schneckenwelle erhöht. Diese Art der Ausbildung ist insbesondere bei einem Gußteil technisch gut realisierbar.

Die Schneckenwendel kann im Querschnitt verschiedene Formen, z.B. die Form eines Rechtecks, eines Trapezes, eines Sägezahns oder einer Sinuslinie aufweisen.

Im folgenden wird die Erfindung unter Hinweis auf die Zeichnung anhand eines Ausführungsbeispieles näher erläutert.

Es zeigt:
- Fig. 1: einen Schnitt durch eine Ausführungsform eines Schneckenbaumes nach der Erfindung; und
- Fig. 2: einen Schnitt durch eine Schneckenpumpe mit einem Schneckenbaum nach der Erfindung.

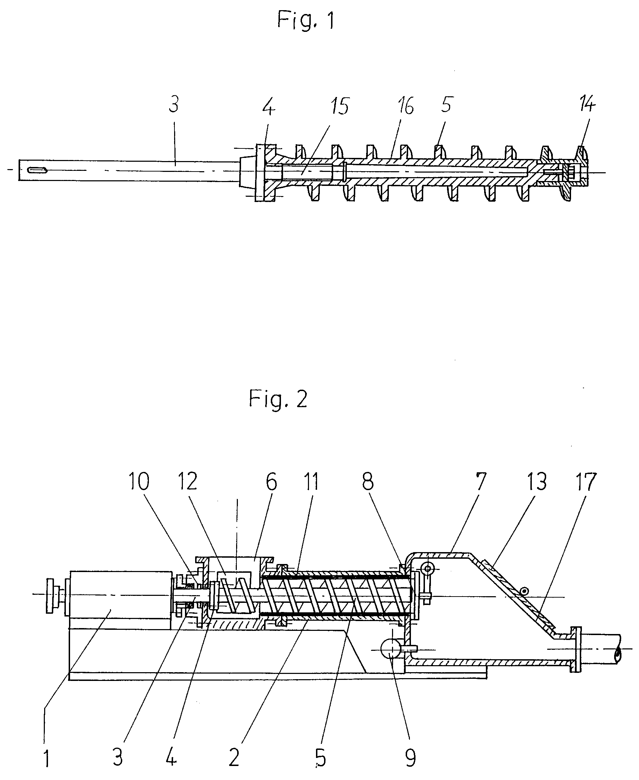

Die in Fig. 2 dargestellte Schneckenpumpe besteht aus einem Lagergehäuse 1, in dem der Schneckenbaum mit seiner Antriebs- oder Lagerwelle 3 gelagert ist. An das Lagergehäuse 1 schließt sich das eigentliche Pumpen- oder Schneckengehäuse 2 an. Dieses weist einen Einlaufraum 6 und eine Förder- oder Druckkammer 7 am Austrittsende auf. Der Eintritt in diese Kammer 7 erfolgt über eine Rückschlagklappe 8. Ein Luftzuführungsgehäuse mit Düsen ist mit 9 bezeichnet.

Der Schneckenbaum besteht aus zwei Teilen, nämlich der Lager- oder Antriebswelle 3 und der Schnecke. Die Schnecke wird durch die Wendel 5 und die Schneckenwelle 16 gebildet. In dem Schneckengehäuse 2 ist eine Verschleißbuchse 11 angeordnet. Sperrluft wird bei 10 zum Abdichten zugeführt. Die Schnecke 5,16 besteht aus Stahlguß oder einem entsprechenden Metallguß. Die Zusammensetzung, d.h. die Gußlegierung, bestimmt sich nach den Anforderungen hinsichtlich Verschleiß, Herstellung usw.. Ebenso wie die Verschleißbuchse 11 auswechselbar ist, ist die Schnecke 5,16 auswechselbar. Zu diesem Zweck ist die Schnecke über eine Flanschverbindung 4 mit der Antriebs- oder Lagerwelle 3 verbunden. Aufgesteckt wird die Schnecke auf einen Aufsteckdorn 15, der an dem Flansch der Lager- oder Antriebswelle 3 vorgesehen ist. Die Innenbohrung der Schnecke ist entsprechend dimensioniert und bearbeitet.

Wenn eine Schnecke ausgewechselt werden soll, werden die Inspektionsdeckel 12 in dem Einlaufraum 6 abgenommen, und die Schrauben der Flanschverbindung 4 werden gelöst. Nach dem Abnehmen des Deckels 13 von der Öffnung 17 der Druckkammer 7 kann die Schnecke 5,16 dann hier herausgezogen werden.

Da die Schnecke ein Gußteil ist, kann der Kerndurchmesser der Schneckenwelle 16 in Richtung auf das Förderende zunehmen, um auf diese Weise für eine Materialverdichtung in diesem Bereich zu sorgen.

Bei der dargestellten Ausführungsform läuft die Schnecke in einer Verschleißbuchse 11, die vorzugsweise aus keramischem Material besteht. Es ist auch möglich, die Schnecke 5,16 selbst aus keramischem Material herzustellen.

## Patentansprüche

1. Schneckenpumpe zum kontinuierlichen Fördern staubförmiger und feinkörniger Schüttgüter, mit einem Schneckenbaum aus einem Raum (6), der unter niedrigem Druck steht, in eine unter höherem Druck stehende Förder- oder Druckkammer (7), deren Auslaß durch eine Rückschlagklappe (8) abgedichtet ist, dadurch gekennzeichnet, daß der Schneckenbaum in eine außerhalb gelagerte Antriebs- oder Lagerwelle (3) und eine Schnecke (5,16) aufgeteilt ist, die durch eine Flanschverbindung (4) lösbar miteinander verbunden sind,
daß an dem Flansch der Antriebswelle (3) ein Aufsteckdorn (15) ausgebildet ist, dem eine Innenbohrung in der Schnecke angepaßt ist, und
daß die Schnecke aus Metallguß, vorzugsweise Stahlguß, besteht.

2. Schneckenpumpe nach Anspruch 1, dadurch gekennzeichnet, daß die Schneckenwendel (5) der Schnecke eine in Förderrichtung zunehmende Steigung aufweist.

3. Schneckenpumpe nach Anspruch 1, dadurch gekennzeichnet, daß die Schneckenwelle (16) in Förderrichtung einen linear zunehmenden Kerndurchmesser aufweist.

4. Schneckenpumpe nach einem oder mehreren der vorstehenden Ansprüche, dadurch gekennzeichnet, daß die Schneckenwendel im Querschnitt die Form eines Rechtecks aufweist. (Fig. 1)

5. Schneckenpumpe nach einem der vorstehenden Ansprüche 1 bis 3, dadurch gekennzeichnet, daß die Schneckenwendel im Querschnitt die Form eines Trapezes aufweist.

6. Schneckenpumpe nach einem der vorstehenden Ansprüche 1 bis 3, dadurch gekennzeichnet, daß die Schneckenwendel im Querschnitt die Form eines Sägezahns aufweist.

7. Schneckenpumpe nach einem der vorstehenden Ansprüche 1 bis 3, dadurch gekennzeichnet, daß die Schneckenwendel im Querschnitt die Form einer Sinuslinie aufweist.

8. Schneckenpumpe nach einem oder mehreren der vorstehenden Ansprüche, dadurch gekennzeichnet, daß die Schnecke (5,16) aus keramischem Material hergestellt ist.

9. Schneckenpumpe nach einem oder mehreren der vorstehenden Ansprüche, dadurch gekennzeichnet, daß die Schnecke in einer Verschleißbuchse (11) läuft, die aus keramischem Material hergestellt ist.

10. Schneckenpumpe nach einem oder mehreren der vorstehenden Ansprüche, dadurch gekennzeichnet, daß die Rückschlagklappe (8) aus keramischem Material hergestellt ist.
